# EUROPÄISCHE PATENTSCHRIFT

(11) **EP 1 670 654 B1**
(45) Veröffentlichungstag und Bekanntmachung des Hinweises auf die Patenterteilung: **26.11.2008**
(21) Anmeldenummer: 04786803.9
(22) Anmeldetag: 17.09.2004
(51) Int. Cl.: B60J 1/18, B60J 5/10, B60J 7/20, B60J 7/047

(54) **KFZ-HECKKLAPPE MIT ABLEGBARER HECKSCHEIBE**
MOTOR VEHICLE HATCHBACK WITH A STORABLE REAR WINDOW
HAYON DE VEHICULE AUTOMOBILE COMPORTANT UNE LUNETTE ARRIERE RANGEABLE

(30) Priorität: 30.09.2003 DE 10345274
(43) Veröffentlichungstag der Anmeldung: 21.06.2006
(73) Patentinhaber: Wilhelm Karmann GmbH, 49084 Osnabrück (DE)
(72) Erfinder: BUNSMANN, Winfried, 49143 Bissendorf (DE); WEISSMÜLLER, Olaf, 49565 Bramsche (DE); HESELHAUS, Udo, 49479 Ibbenbüren (DE)
(86) Internationale Anmeldenummer: PCT/DE2004/002084
(87) Internationale Veröffentlichungsnummer: WO 2005/039906

(56) Entgegenhaltungen:
- WO-A1-01/14158
- DE-A1- 3 843 674
- DE-U- 29 804 387
- FR-A1- 2 806 969

## Beschreibung

Die Erfindung betrifft ein Kraftfahrzeug mit einer eine Heckscheibe umfassenden Heckklappe, wobei die Heckscheibe separat in eine Freigabestellung verlagerbar ist, nach dem Oberbegriff des Anspruchs 1.

Aus der DE 296 22 436 U1 ist ein Kraftfahrzeug bekannt, das eine Heckklappe mit einer Heckscheibe aufweist, die zur Verbesserung des Freiluftgefühls für die Insassen nach unten hin in einen darunter gelegenen Bereich der Klappe einfahrbar ist und damit den in ihrer geschlossenen Stellung eingenommenen Raum freigibt. Eine derartige Verlagerung der Heckscheibe ist nur dann möglich, wenn der untere Bereich der Klappe eine hinreichende knickfreie Höhe zur Aufnahme der Scheibe aufweist, was in der Regel nur für Steilheckfahrzeuge oder Schrägheckfahrzeuge mit einer sehr lang nach unten erstreckten Heckklappe möglich ist.

Die gattungsgemäße DE 38 43 674 A1 zeigt ein Kraftfahrzeug mit einem Schrägheck, bei dem aus der das Schrägheck überdeckenden Heckklappe eine darin enthaltene Scheibe separat nach vorne in eine aufnehmende Schublade eines festen Dachabschnitts verschiebbar ist. Damit ist jedoch die verbleibende Kopffreiheit unter diesem festen Dachabschnitt deutlich eingeschränkt, wenn das Dach nicht eine erhebliche Dicke nach oben aufweisen soll, was aus aerodynamischen und Designgründen sehr unerwünscht ist. Zudem ergibt sich durch das Öffnen der Scheibe eine Schwerpunktverlagerung nach oben. Die Anordnung eines Schiebedachs o. ä. in dem festen Dachabschnitt, in den die Scheibe eingeschoben ist, ist erschwert.

Die DE 298 04 387 U1 zeigt ein Fahrzeug, bei dem ein vorderer Schiebedachteil über einen Heckklappenteil verlagerbar ist und die Heckklappe ihrerseits an einem Führungsrahmen um eine Fahrzeugquerachse schwenkbar gehalten ist. Eine separate Verlagerung der Heckscheibe in eine von der Heckklappe entfernte Stellung ist nicht möglich.

Der Erfindung liegt das Problem zugrunde, bei Fahrzeugen der genannten Art die Gestaltungsmöglichkeiten zu erweitern.

Die Erfindung löst dieses Problem durch ein Kraftfahrzeug mit den Merkmalen des Anspruchs 1 und eine bewegliche Heckklappe mit den Merkmalen des Anspruchs 10. Hinsichtlich weiterer vorteilhafter Ausgestaltungen der Erfindung wird auf die weiteren Ansprüche 3 bis 9 verwiesen.

Mit der Erfindung ist in Ausgestaltung nach Anspruch 1 eine Unabhängigkeit der Gestaltung des unter der Heckscheibe gelegenen Bereichs der Heckklappe von dem Erfordernis, einen Raum zur Unterbringung der geöffneten Scheibe bereitstellen zu müssen, erreicht. Der untere Bereich kann daher beispielsweise als relativ schmaler Streifen oder mehrfach abgewinkelt ausgebildet sein und eine Höhenerstreckung aufweisen, die deutlich kleiner ist als die Höhenerstreckung der Heckscheibe.

Vorzugsweise wird gemäß den Merkmalen nach Anspruch 2 mit der Öffnungsfähigkeit auch von vor der Heckklappe gelegenen Dachteilen eine Verbesserung des Freiluftgefühls möglich, wobei für ein Cabriolet-Gefühl die vorderen Dachteile bis hin zum Windschutzscheibenrahmen geöffnet werden können.

Wenn dabei die Schließ- und die Freigabestellung der Heckscheibe und auch deren Verlagerung mit einem fahrzeugseitigen Halten der Heckscheibe bewirkbar ist, ist die Bedienung sehr vereinfacht; es besteht zudem dann keine Gefahr, daß ein Benutzer beim Hantieren mit einer vollständig gelösten Scheibe diese beschädigt.

Sofern die Heckscheibe bei in Offenstellung befindlicher Heckklappe ablegbar ist, kann eine - kostengünstige - manuelle Handhabung vereinfacht sein, etwa dadurch, daß von der bei geschlossener Klappe innen liegenden Seite an der geöffneten Heckklappe angegriffen wird. Dabei ist eine Ablagekinematik zur Überführung der Heckscheibe in ihre Freigabestellung möglich, die den darunter liegenden Gepäckraum auch während der Ablagebewegung nur gering tangiert.

Insbesondere ist es zum Erhalt des Gepäckraums vorteilhaft, wenn die Heckscheibe in Freigabestellung nahezu vertikal gehalten ist, etwa hinter den Lehnen einer Rückbank.

Bei einer im wesentlichen U-förmigen Ausbildung der Heckklappe außerhalb der Heckscheibe kann die Heckklappe bei in Freigabestellung befindlicher Scheibe eine große, nach vorne durchgehende und nicht von einem Querträger unterbrochene Öffnung bilden. Das Freiluftgefühl ist dabei besonders ausgeprägt. Insbesondere ist es dann verbessert, wenn bei dieser nach vorne offenen U-Form in geschlossener Stellung der Heckscheibe an ihre obere und in Fahrtrichtung vordere Kante zumindest ein weiteres zur Öffnung bewegliches Plattenteil anschließt, so daß sich dann ein den von der Heckscheibe einnehmbaren Raum mit umfassender Freiluftbereich ergibt.

Weitere Vorteile und Merkmale der Erfindung ergeben sich aus in der Zeichnung zumindest schematisch dargestellten und nachfolgend beschriebenen Ausführungsbeispielen des Gegenstandes der Erfindung.

In der Zeichnung zeigt:
- Fig. 1: ein erfindungsgemäßes Kraftfahrzeug in perspektivischer Ansicht von schräg hinten mit einer geschlossenen Heckscheibe und einer in Schließstellung befindlichen Heckklappe sowie mit zwei weiteren, an die obere und in Fahrtrichtung vordere Kante anschließenden beweglichen Plattenteilen,
- Fig. 2: eine ähnliche Ansicht wie Fig. 1 nach Öffnung des vordersten Plattenteils;
- Fig. 3: eine ähnliche Ansicht wie Fig. 2 bei in Offenstellung befindlicher Heckklappe,

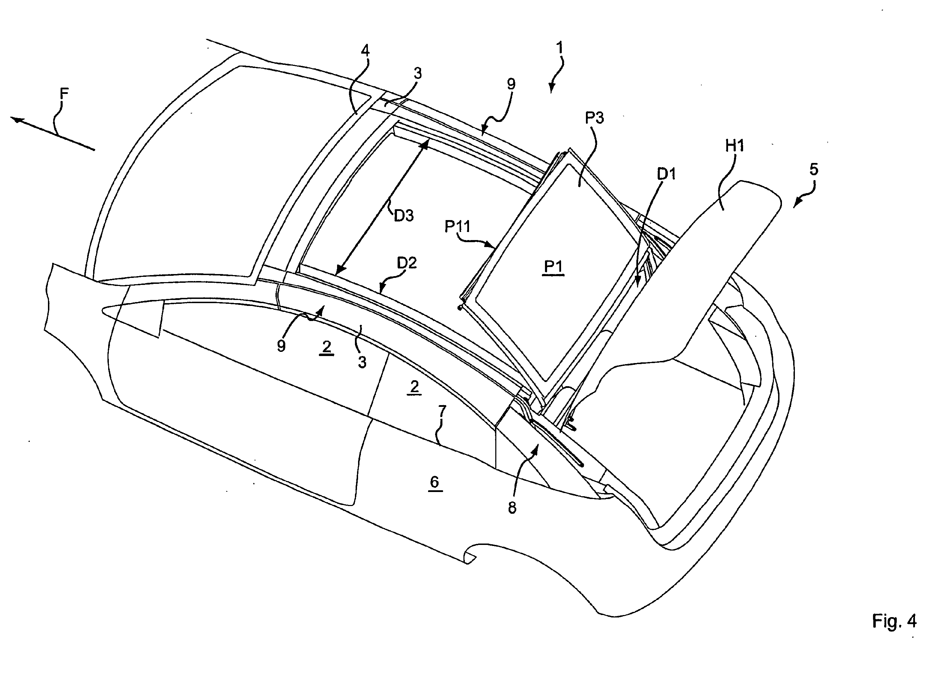

- Fig. 4: eine ähnliche Ansicht wie Fig. 3 während der Öffnung der beiden vorderen Plattenteile,

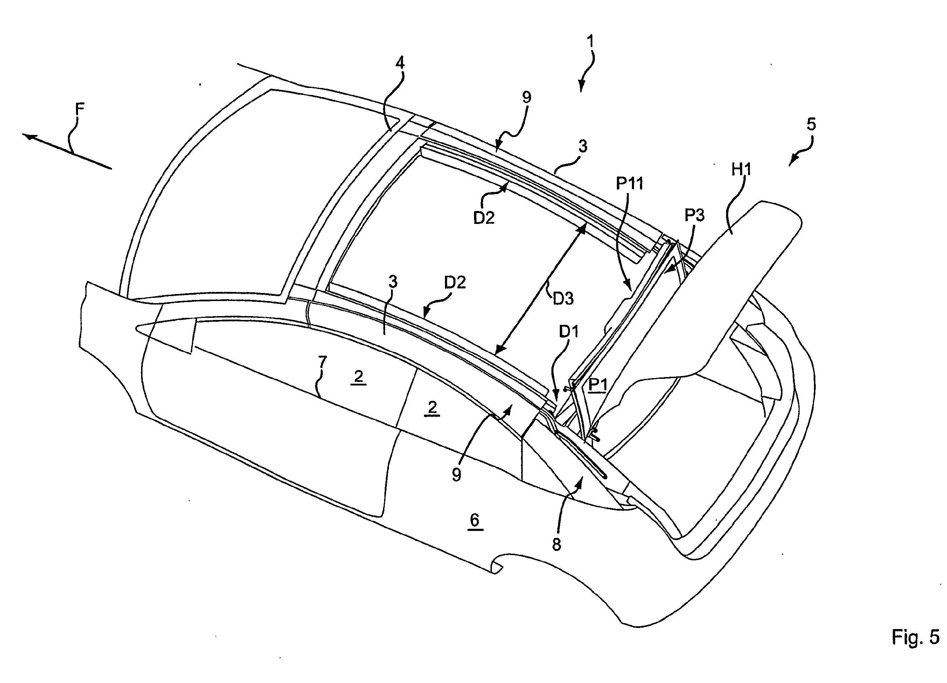

- Fig. 5: eine ähnliche Ansicht wie Fig. 4 bei weiter fortschreitender Öffnung der vorderen Plattenteile,

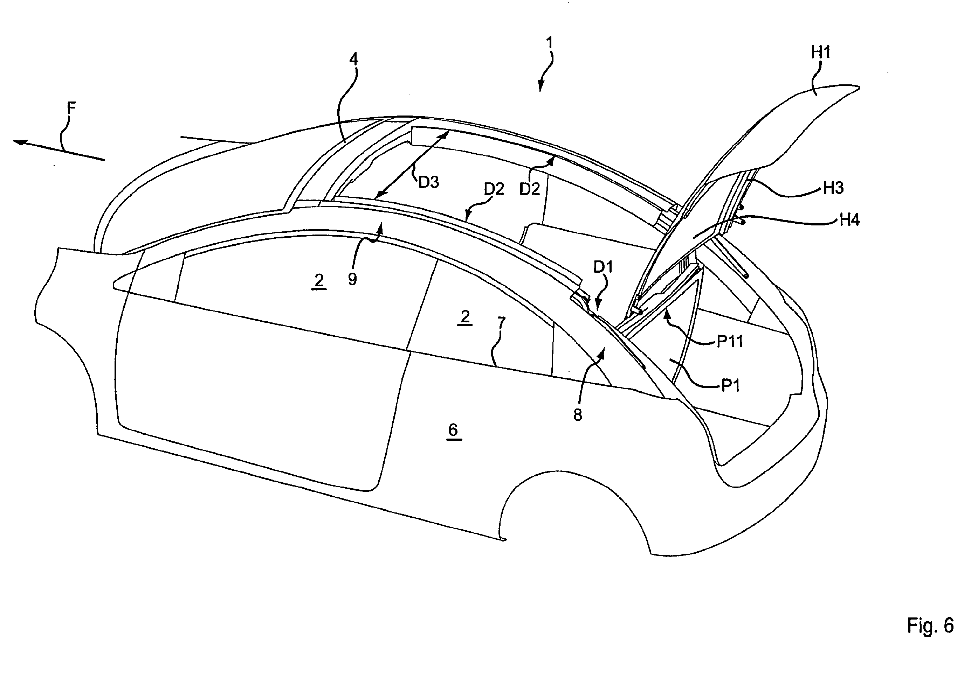

- Fig. 6: eine ähnliche Ansicht wie Fig. 5 mit im wesentlichen vertikal in der Karosserie abgelegten vorderen Plattenteilen,

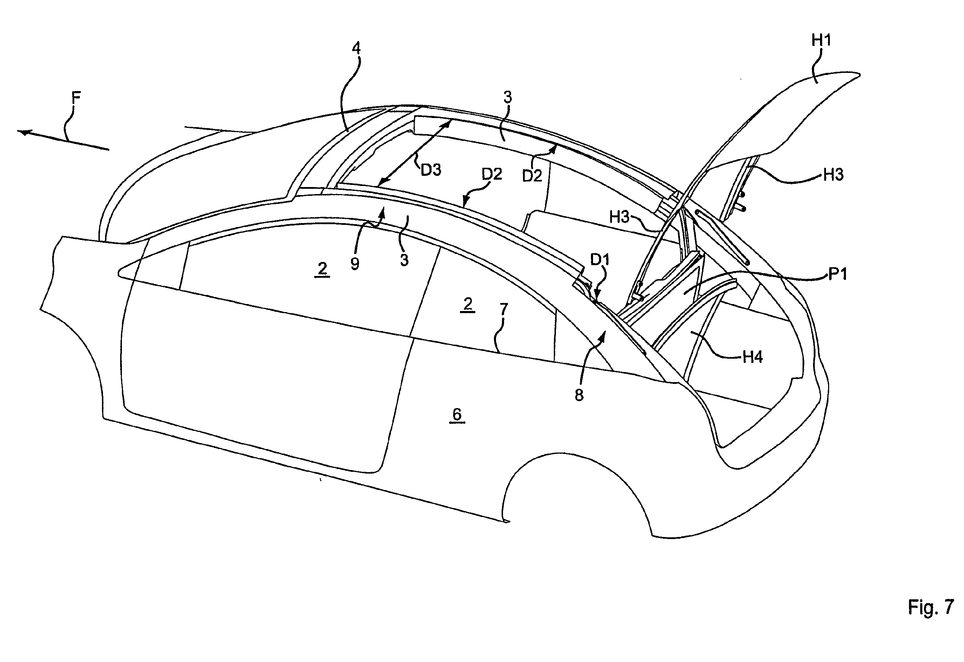

- Fig. 7: eine ähnliche Ansicht wie Fig. 6 mit zusätzlich in Freigabestellung in der Karosserie abgelegter Heckscheibe,

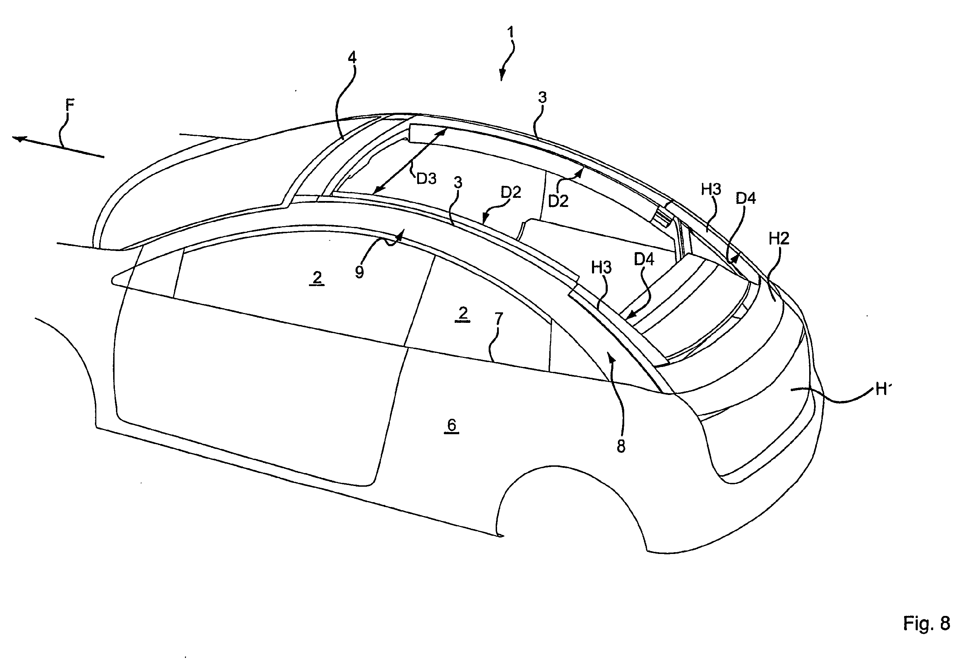

- Fig. 8: eine ähnliche Ansicht wie Fig. 7 nach Schließen der Heckklappe,
- Fig. 9: eine schematisierte Seitenansicht des Fahrzeugs in der Dachstellung nach Fig. 1,

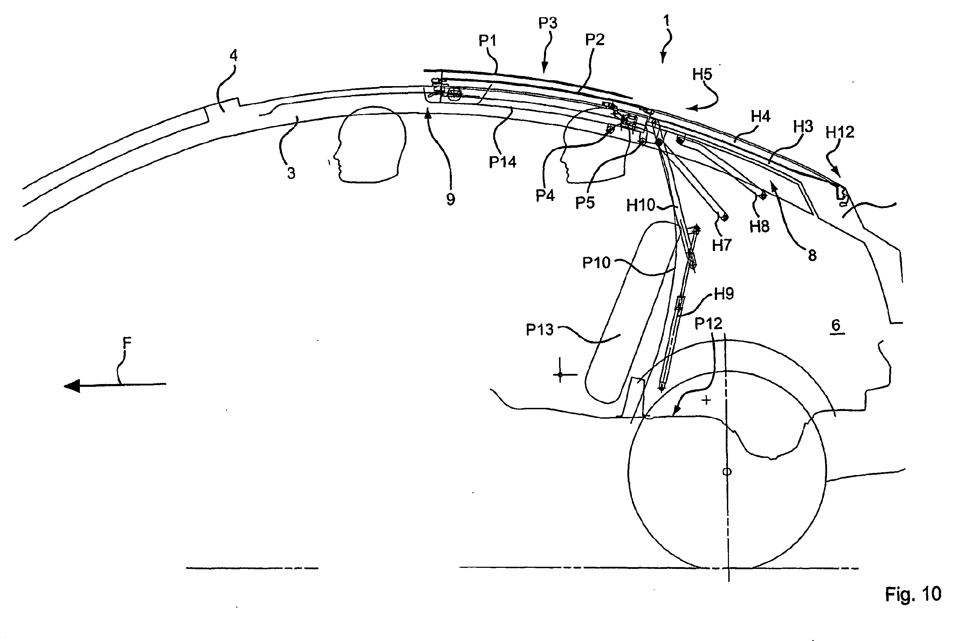

- Fig. 10: eine ähnliche Ansicht wie Fig. 9, jedoch nach Öffnung des vordersten Plattenteils entsprechend der Dachstellung nach Fig. 2,
- Fig. 11: eine ähnliche Ansicht wie Fig. 10, jedoch mit in Offenstellung befindlicher Heckklappe entsprechend der Dachstellung nach Fig. 3,
- Fig. 12: eine ähnliche Ansicht wie Fig. 11, jedoch während der Öffnung der beiden vorderen Plattenteile entsprechend der Dachstellung nach Fig. 4,
- Fig. 13: eine ähnliche Ansicht wie Fig. 12, jedoch während der weiter fortschreitenden Öffnung der vorderen Plattenteile entsprechend der Dachstellung nach Fig. 5,
- Fig. 14: eine ähnliche Ansicht wie Fig. 9, jedoch bei vollständig geöffneten vorderen Plattenteilen entsprechend der Dachstellung nach Fig. 6,
- Fig. 15: eine ähnliche Ansicht wie Fig. 14, jedoch bei Herausschwenken der Heckscheibe aus ihrer Schließstellung in der Heckklappe,
- Fig. 16: eine ähnliche Ansicht wie Fig. 15 bei weiter fortschreitender Öffnung der Heckscheibe,
- Fig. 17: eine ähnliche Ansicht wie Fig. 16 bei vollständig in Freigabestellung befindlicher Heckscheibe entsprechend der Stellung nach Fig. 7,
- Fig. 18: eine ähnliche Ansicht wie Fig. 17 nach Schließen der Heckklappe entsprechend der Stellung nach Fig. 8,
- Fig. 19: eine alternative Ausbildung einer Kinematik zur Überführung der Heckscheibe in die Freigabestellung, wobei die Kinematik geteilte seitliche Führungsschienen enthält, bei abgelegten vorderen Plattenteilen und geschlossener Heckklappe mit in Schließstellung befindlicher Heckscheibe,
- Fig. 20: eine ähnliche Ansicht wie Fig. 19 bei geöffneter Heckklappe,
- Fig. 21: eine ähnliche Ansicht wie Fig. 20 während der Verlagerung der Heckscheibe aus den sie umgebenden Teilen der Heckklappe in Freigabestellung,
- Fig. 22: eine ähnliche Ansicht wie Fig. 21 bei in Freigabestellung befindlicher Heckscheibe,
- Fig. 23: eine ähnliche Ansicht wie Fig. 22 nach Schließen der Heckklappe.

In den Zeichnungsfiguren ist generell ein mit einer Rückbank versehenes vier- oder fünfsitziges Kraftfahrzeug 1 dargestellt. Dies ist nicht zwingend. Auch kann beispielsweise ein Zweisitzer erfindungsgemäß ausgebildet sein.

Das Fahrzeug 1 umfaßt oberhalb seitlicher Scheiben 2 in sich jeweils starre Dachholme 3, die in Ansicht von oben im wesentlichen längs zur Fahrzeugerstreckung zwischen einem Windschutzscheibenrahmen 4 und dem Heckbereich 5 des Fahrzeugs liegen und in Seitenansicht bogenförmig verlaufen. Diese sind hier Bestandteil der Fahrzeugkarosserie 6.

Im hinteren Fahrzeugbereich 5 ist eine Heckklappe H1 vorgesehen. Diese ist hier im wesentlichen U-förmig ausgebildet mit einem unteren Querschenkel H2, der beispielsweise Teile der Rückleuchten und/oder einen Kennzeichenträger umfassen kann, und mit Seitenschenkeln H3, die in geschlossener Stellung der Heckklappe H1 in Fahrtrichtung F entsprechend dem Verlauf der Dachholme 3 vorwärts und aufwärts weisen. Zwischen den Teilen H2 und H3 ist in ihrer Schließstellung eine insbesondere starre Heckscheibe H4, die beispielsweise aus Kunststoff oder vorteilhaft Glas bestehen kann, aufgenommen. In dieser Stellung dienen die Seitenschenkel H3 somit als seitliche Rahmenteile der Heckscheibe H4. Die dabei in Fahrtrichtung F obere und vordere Kante H5 der Heckscheibe H4 bildet dabei gleichzeitig auch die obere und vordere Kante der Heckklappe H1 aus und ist wegen deren U-Form von keinem Querträger untergriffen.

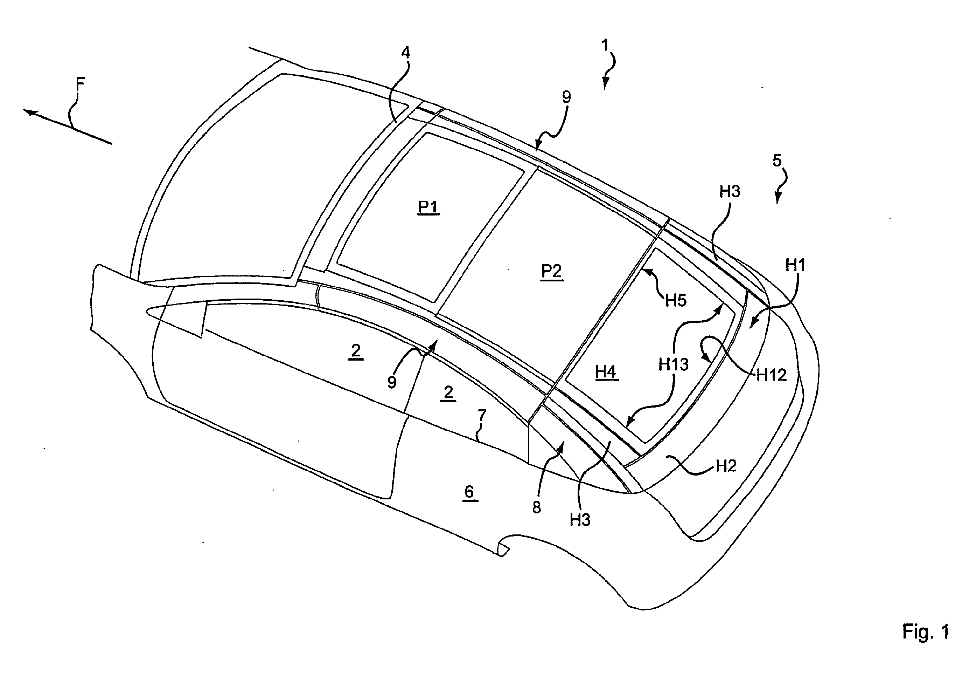

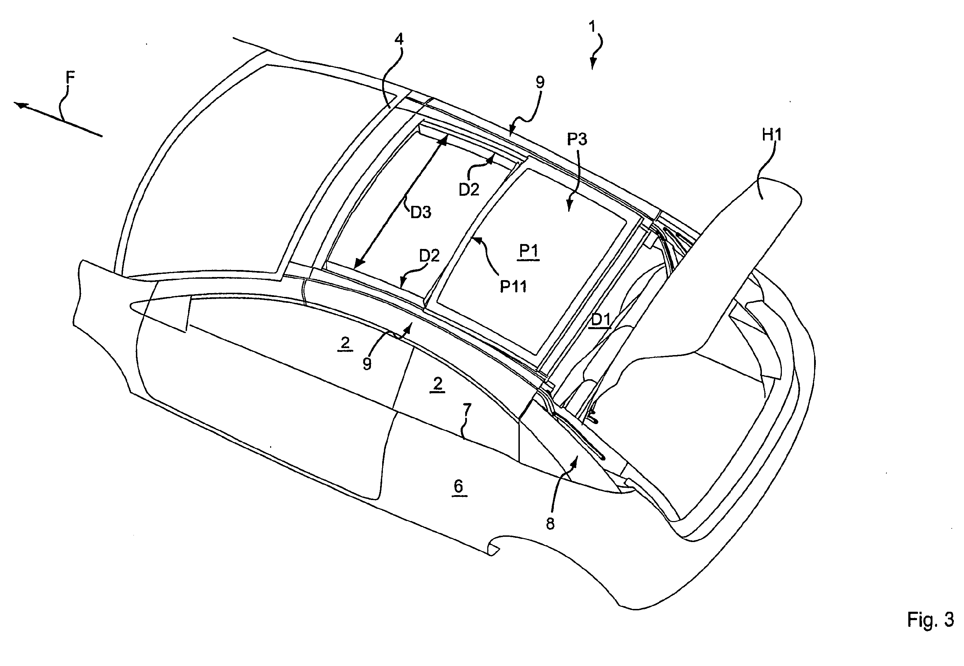

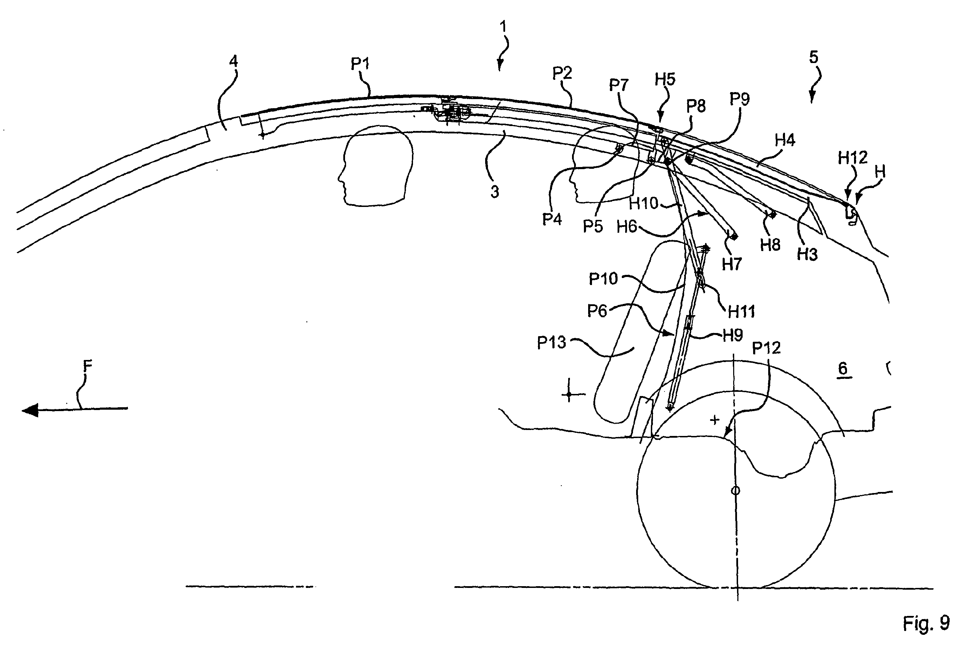

Die Heckklappe H1 ist insgesamt zwischen einer geschlossenen (Fig. 1) und einer offenen Stellung (Fig. 3) beweglich an der Karosserie 6 gehalten. Die Öffnungsbewegung ist keine reine Schwenkbewegung, sondern erfolgt derart, daß in ihrer Offenstellung die vordere Kante H5 der Heckklappe H1 gegenüber ihrer geschlossenen Stellung nach hinten verlagert ist. Hierfür ist (Fig. 9 ff.) die Heckklappe H1 an jeder Fahrzeugseite zum Beispiel über ein Mehrgelenk, hier ein Viergelenk H6, gehalten. Dessen Lenker H7 und H8 sind jeweils seitlich in der Fahrzeugkarosserie 6, etwa im hinteren Bereich der Dachholme 3, angelenkt.

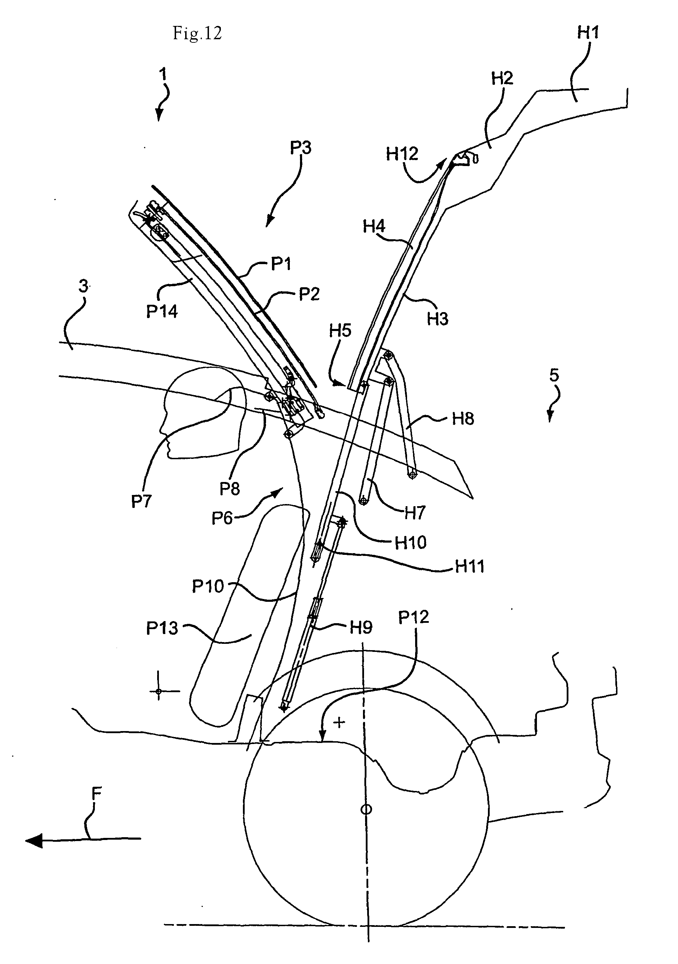

Aus der in den Figuren 3 und 12 gezeigten Offenstellung der Heckklappe H1 heraus ist die Heckscheibe H4 in ihre separate Freigabestellung in die Fahrzeugkarosserie 6 absenkbar.

Hierfür ist in einer ersten Ausführung die Heckscheibe H4 über seitlich in der Karosserie 6 angeordnete Gestängeteile H9, H10 mit dieser verbunden. Das Gestängeteil H9 ist dabei ein ein-und ausfahrbarer Zylinder, der wegen seiner Längenvariabilität in der Lage ist, auch bei geschlossener Heckscheibe H4 die Öffnungsbewegung der dann diese umfassenden Heckklappe H1 mitzugehen (Übergang von Fig. 1 zu Fig. 3).

Der Zylinder H9 ist einenends an der Karosserie 6 angelenkt. Er greift mit seinem freien Ende an einem weiter oberhalb an der Karosserie 6 angelenkten Lenker H10 an, wobei dieser Angriffspunkt zur Anlenkung H11 des Lenkers H10 beabstandet liegt und sich somit ein Hebelarm ergibt.

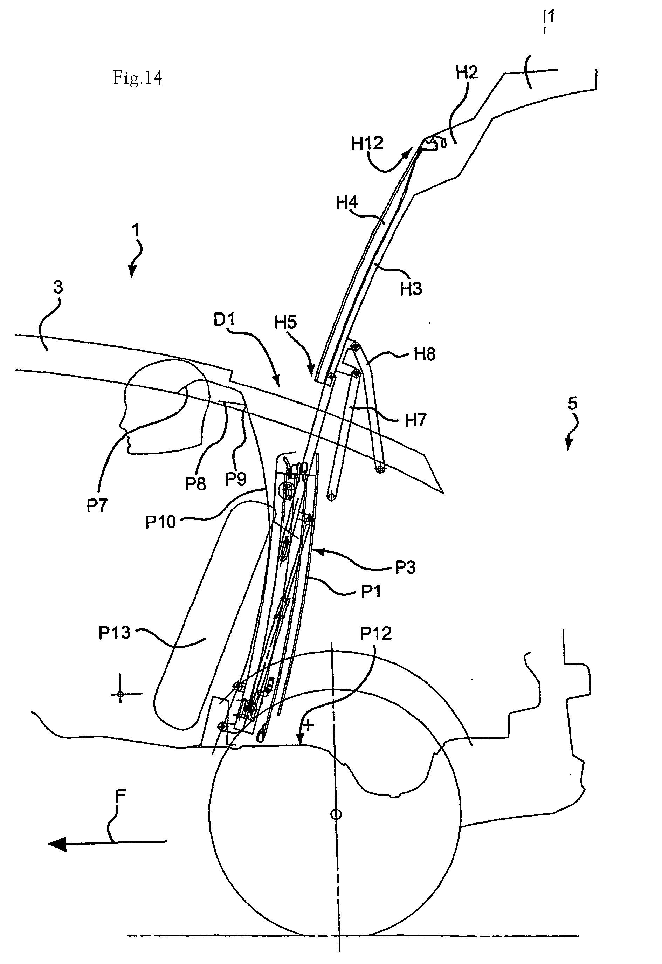

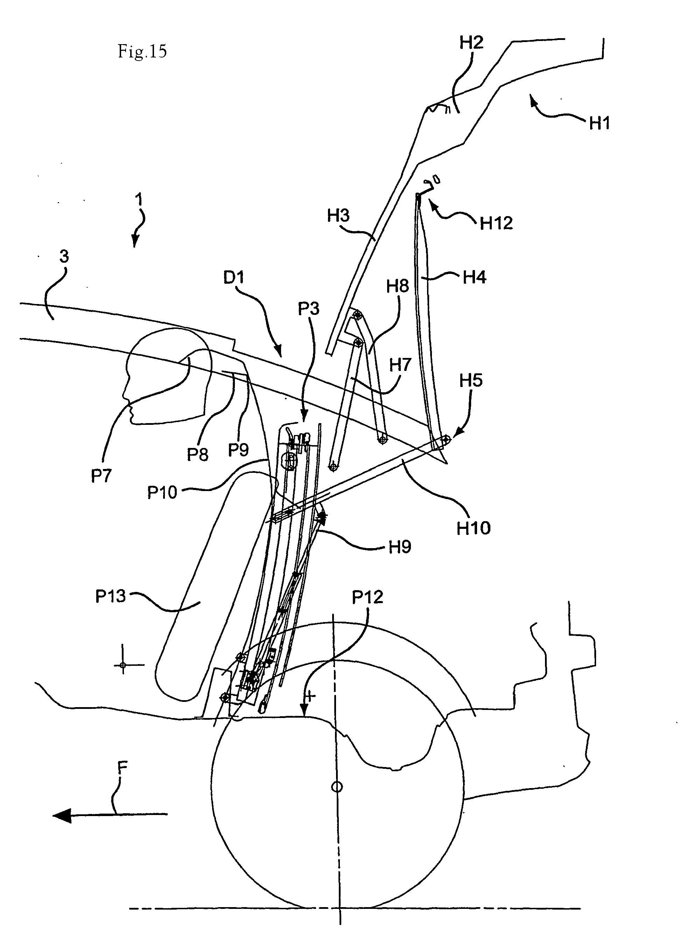

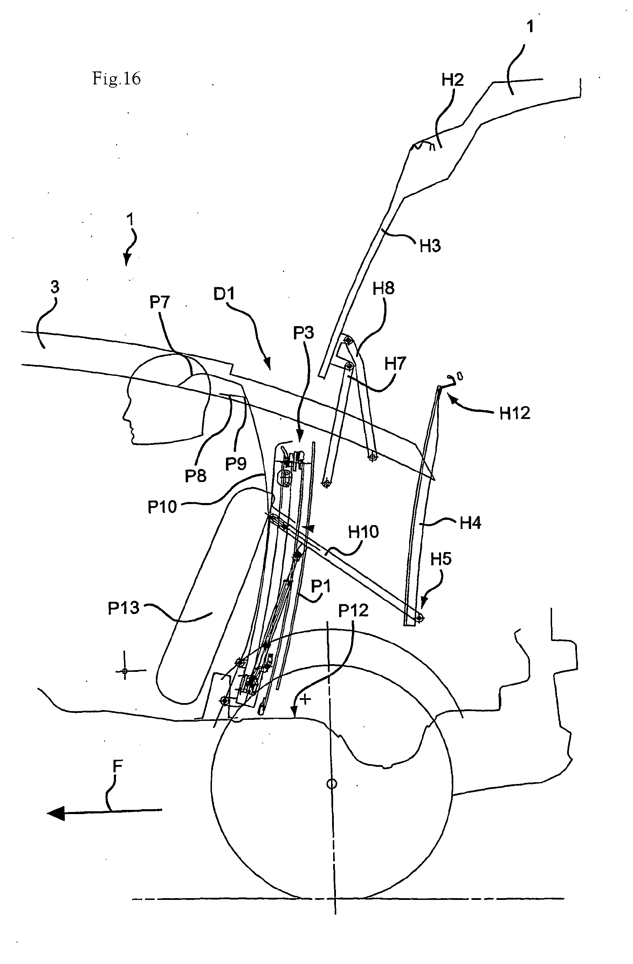

Der Lenker H10 greift mit seinem freien Ende seitlich der Oberkante H5 der Heckscheibe H4 an. Um diese in Freigabestellung zu überführen, wird zunächst die Heckscheibe H4 an ihrem in geschlossener Stellung die untere Kante bildenden Ende H12 vom Mittelschenkel H2 der Heckklappe H1 entriegelt (Übergang von Fig. 14 zu Fig. 15), wobei die Scheibe H4 für eine manuelle Bedienung an ihren Seitenkanten H13 von einem Benutzer gehalten und nahezu parallel abwärts verlagert werden kann (Fig. 16). Dabei wird der Hebel H10 um das Gelenk H11 abwärts verschwenkt, und der Zylinder H9 fährt ein und schwenkt nach vorne. Damit wird die Heckscheibe H4 insgesamt zumindest nahezu vertikal und leicht nach vorne verlagert platzsparend abgelegt, hier im Paket mit weiteren Dachteilen, die unten noch näher erläutert sind.

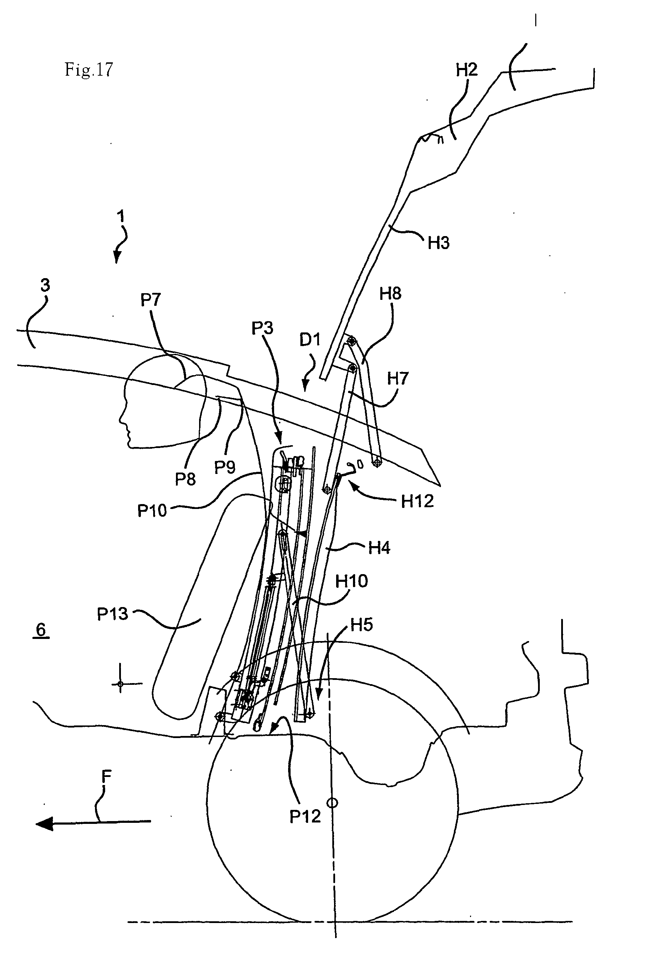

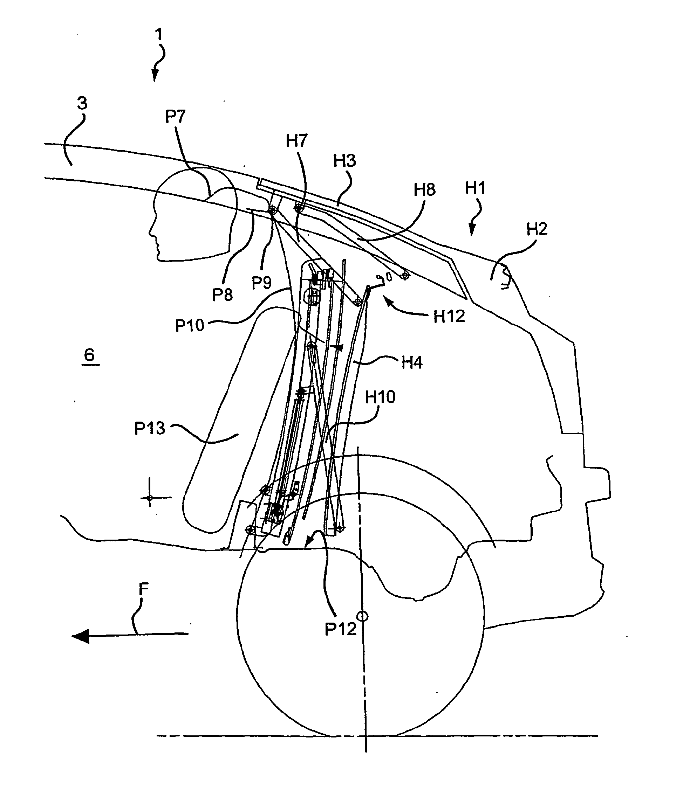

In dieser Freigabestellung (Fig. 17) ist die Heckscheibe H4 unterhalb einer seitlichen Fensterbrüstungslinie 7 der Karosserie 6 mit Abstand zur Heckklappe H1 gehalten. Der Raum zwischen den Seitenschenkeln H3 und dem unteren Querschenkel H2 der Heckklappe H1 ist vollständig geöffnet. Diese kann dann wieder geschlossen werden (Fig. 18).

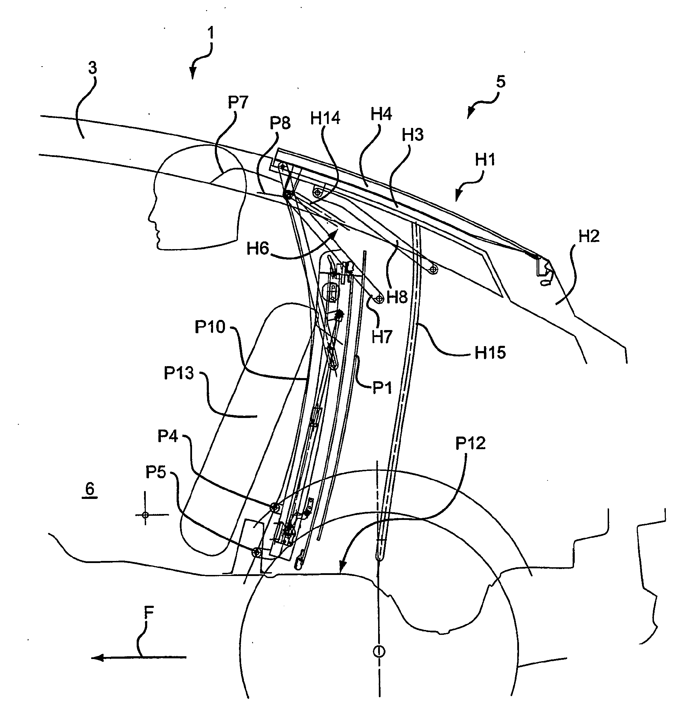

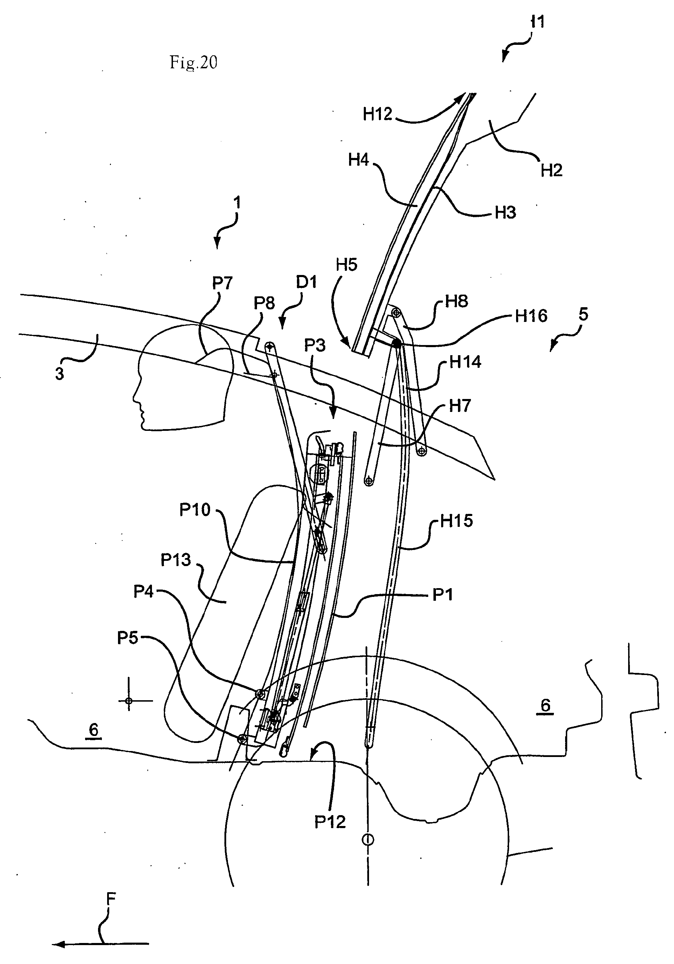

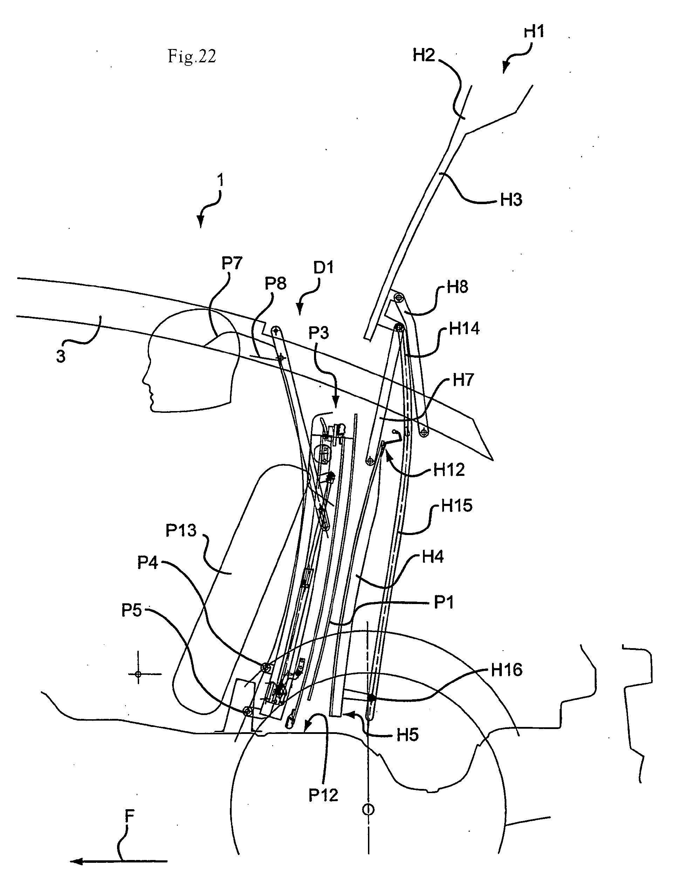

In einer zweiten Ausführung (Fig. 19 - Fig. 23) ist die Heckscheibe H4 über seitliche Führungsschienenabschnitte H14, H15 in ihre Freigabestellung überführbar. Die Führungsschiene H14, H15 ist zweigeteilt, um ihre Fortführung über die Seitenholme 3 bei geöffneter Heckklappe H1 zu ermöglichen (Fig. 20), gleichzeitig jedoch bei geschlossener Heckklappe H1 von dieser übergriffen werden zu können (Fig. 19). Der erste Abschnitt H14 der Führungsschiene ist dem Viergelenk H6 zugeordnet und stellt sich mit einem ersten Lenker H7 bei Öffnung der Heckklappe H1 aufrecht, wodurch er automatisch in eine fluchtende Lage zu dem unteren, in der Karosserie 6 fest angeordneten Abschnitt H15 der Führungsschiene gelangt (Übergang von Fig. 19 zu Fig. 20).

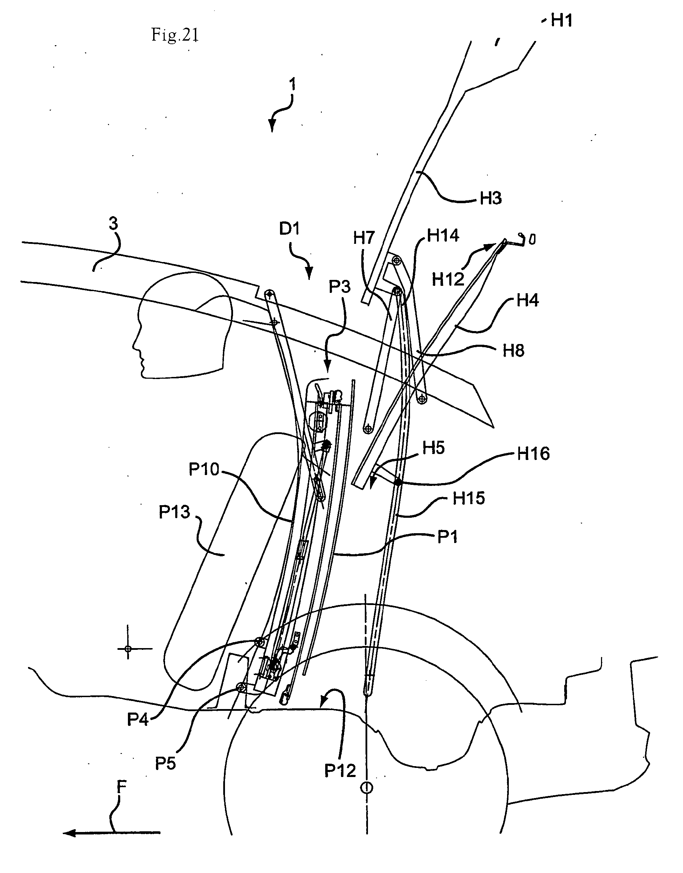

Um die Heckscheibe H4 in ihre Freigabestellung zu überführen, wird sie auch hier zunächst an ihrem in geschlossener Stellung die untere Kante bildenden Ende H12 vom Mittelschenkel H2 der Heckklappe H1 entriegelt (Übergang von Fig. 20 zu Fig. 21), wobei die Scheibe H4 für eine manuelle Bedienung ebenfalls an ihren Seitenkanten H13 von einem Benutzer gehalten und über im Seitenbereich der Oberkante H5 liegende Achsstummel H16 in der Führungsschiene H14, H15 nahezu parallel abwärts verlagerbar ist (Fig. 21).

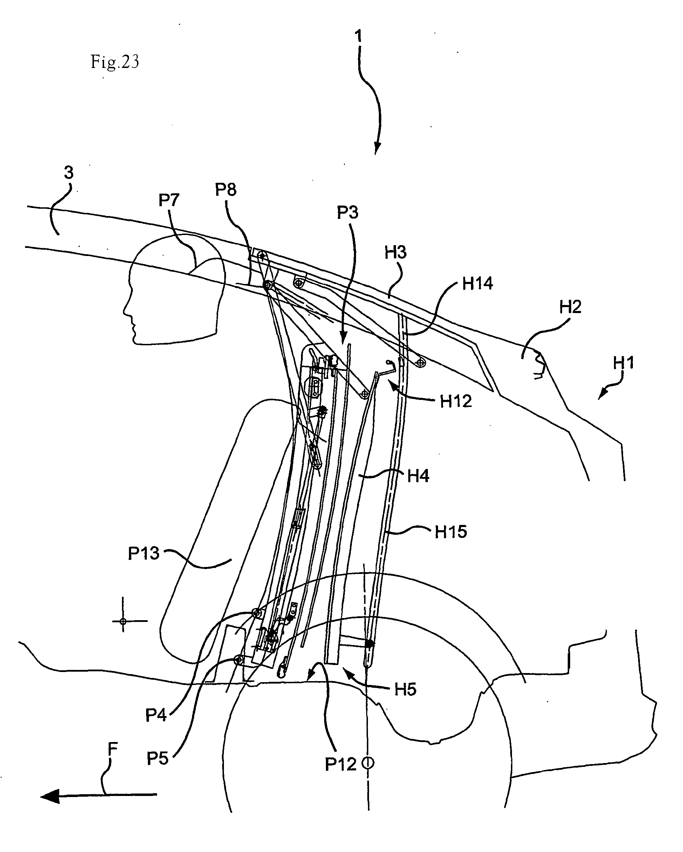

Auch in dieser Ausführung ist die Heckscheibe H4 insgesamt in Freigabestellung zumindest nahezu vertikal und leicht nach vorne verlagert platzsparend unterhalb einer seitlichen Fensterbrüstungslinie 7 der Karosserie 6 gehalten. Die Heckklappe H1 kann dann wieder geschlossen werden (Fig. 23).

In den gezeichneten Ausführungsbeispielen umfaßt das Kraftfahrzeug 1 in geschlossener Stellung der Heckscheibe H4 (Fig. 1) an ihre vordere Kante H5 unmittelbar anschließend und in Fahrtrichtung F vorgeordnet weitere bewegliche Plattenteile P1, P2. Ihre Anzahl ist je nach Dachlänge variabel; sie liegen im geschlossenen Zustand im wesentlichen horizontal, fluchtend hintereinander sowie fluchtend zu der Heckscheibe H4 und stützen sich unmittelbar oder mittelbar an den seitlichen Dachholmen 3 ab. Die - hier zwei - Dachteile P1 und P2 können aus unterschiedlichen Materialien, etwa metallischen, Glas- oder Kunststoffwerkstoffen, gebildet sein. Insbesondere können sie im wesentlichen transparent ausgebildet sein. Dabei empfiehlt es sich, um Schattenstreifen im Innenraum weitgehend zu vermeiden, die Dachteile P1, P2 in Fahrzeuglängsrichtung nicht zu schmal ausfallen zu lassen. Eine jeweilige Mindesterstreckung von 40 cm in Fahrzeuglängsrichtung ist daher vorteilhaft.

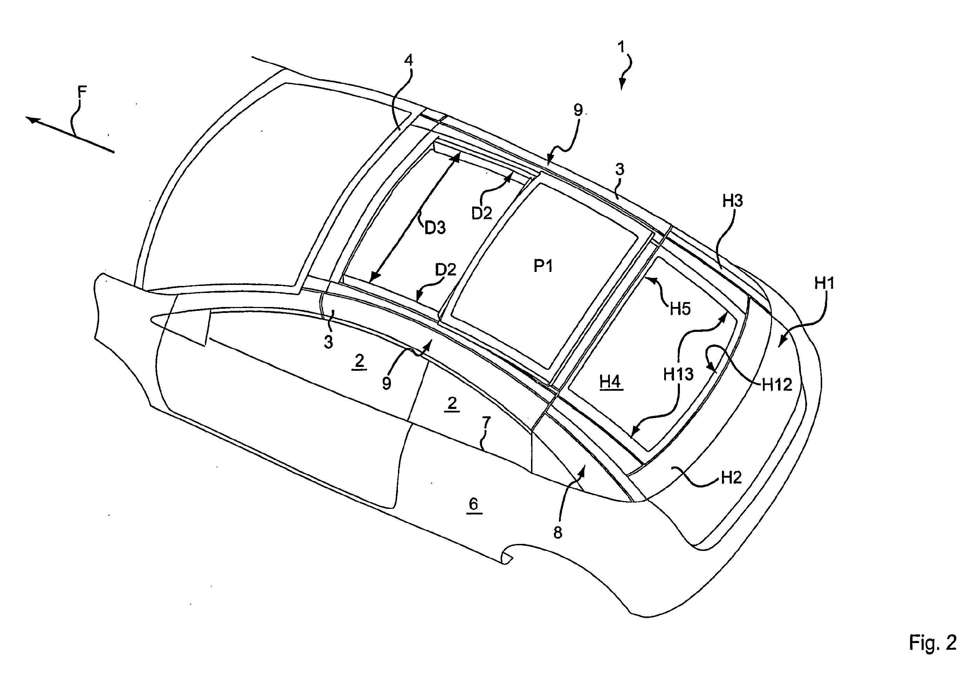

Das vordere Dachteil P1 ist aus der geschlossenen Stellung heraus nach Art eines Schiebedachs über das dahinter liegende Dachteil P2 verlagerbar und liegt in seiner geöffneten Stellung im wesentlichen parallel auf diesem (Fig. 2 ff.). Die so gebildete Stellung der Dachteile P1, P2 stellt eine mögliche dauerhafte Fahrstellung dar. Aus ihr heraus kann jedoch auch eine weitere Dachöffnung mit Abwärtsverlagerung der als Paket P3 übereinanderliegenden Dachteile P1 und P2 erfolgen, um diese innerhalb der Karosserie 6 abzusenken.

Hierfür ist das so gebildete Dachteilpaket P3 im hinteren Bereich des hinteren Dachteils P2 über zwei hintereinanderliegende Führungsrollen P4, P5 in einer seitlichen Führungsschiene P6 abgestützt.

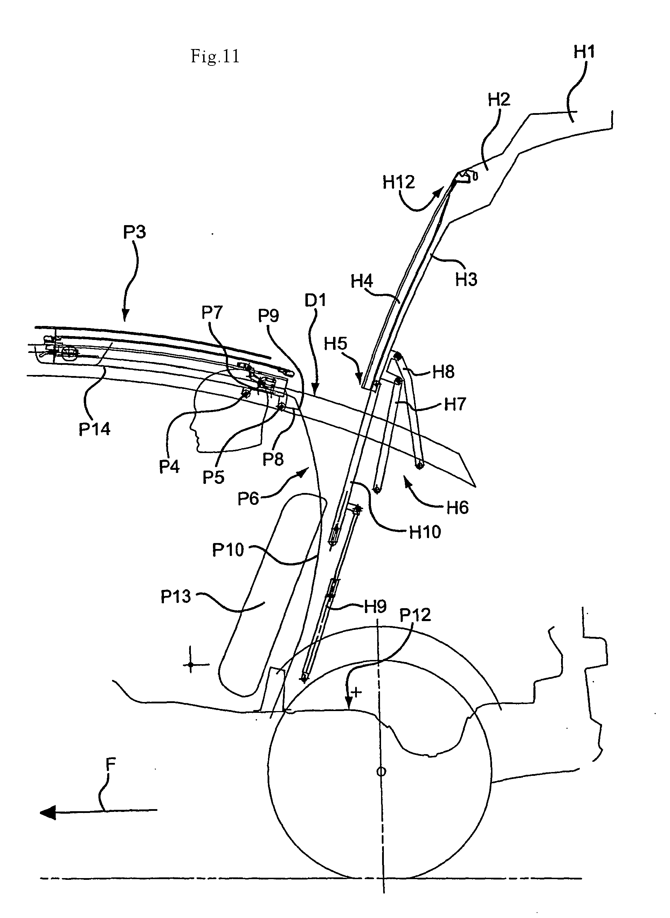

Bei beginnender Ablage des Dachteilpakets P3 in der Karosserie 6 (Übergang von Fig. 11 zu Fig. 12) läuft die vordere P4 der beiden Rollen auf einem aufwärts gerichteten Führungsbahnabschnitt P7 nach hinten, wohingegen die hintere Führungsrolle P5 zunächst in einem nahezu horizontal liegenden Führungsbahnabschnitt P8 läuft. Der Abschnitt P8 mündet an der Stelle P9 in den leicht gekrümmt abwärts laufenden Abschnitt P10 der Führungsschiene P6 ein.

Durch die nach hinten aufwärts gerichtete Steigung des Abschnitts P7 wird mit der beginnenden Bewegung des Dachteilpakets P3 sofort dessen vorderer Rand P11 angehoben, wodurch die Kopffreiheit auch für hinten sitzende Passagiere in keiner Phase der Bewegung unter das Maß bei geschlossenen Dachteilen P1, P2 sinkt.

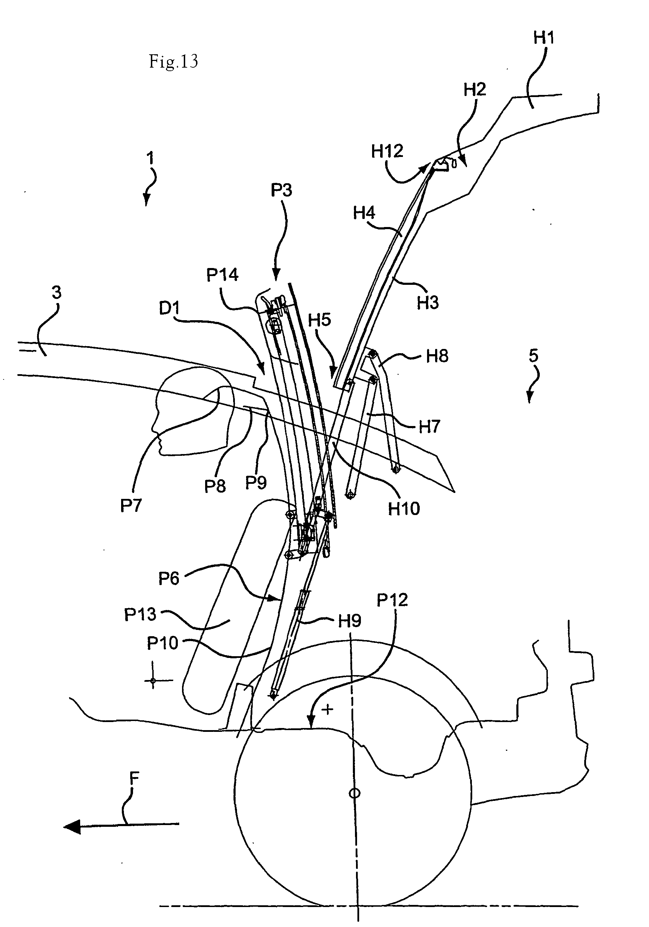

Bei Eintritt der hinteren Führungsrolle P5 in den Abschnitt P10 läuft die vordere Führungsrolle P4 in einem dem Verlauf der seitlichen Dachholme 3 folgenden Abschnitt der Führungsbahn P6, wodurch sich bei der nahezu vertikalen Abwärtsbewegung der hinteren Führungsrolle P5 die Steilstellung des Dachpakets P3 noch verstärkt und dieses bei Eintritt auch der vorderen Führungsrolle P4 in den Abschnitt P10 nahezu senkrecht steht (Fig. 13). In dieser Stellung kann es bis zum inneren Fahrzeugboden P12 abwärts gleiten und raumsparend etwa hinter den Lehnen P13 der zweiten Sitzreihe nahezu vertikal stehen (Fig. 14).

Das Schließen der Dachteile P1, P2 läuft entsprechend umgekehrt ab, wobei auch dort in keiner Phase der Bewegung die Kopffreiheit unter das Maß bei geschlossenen Dachteilen sinkt. Die Fahrzeugsilhouette kann somit sehr flach und sportlich gehalten werden.

Wenn das vordere Dachteil P1 direkt an den Windschutzscheibenrahmen 4 anschließt, läßt sich eine sehr große Dachöffnung herstellen. Auch können die seitlichen Karosseriebereiche 3 oberhalb der Seitenscheiben sehr schmal ausgebildet werden, so daß die Breite der Plattenteile P1 und P2 sich bis fast zur Oberkante der Seitenscheiben erstrecken kann.

Um die Ablage der Dachteile P1 und P2 zu erleichtern, kann die Heckklappe H1, wie oben bereits beschrieben, derart öffnen, daß in ihrer Offenstellung die vordere Kante H5 gegenüber der geschlossenen Stellung nach hinten verlagert ist. Dadurch ergibt sich in Fahrtrichtung F vor der geöffneten Heckklappe H1 ein Durchtrittsraum D1, der vollständig hinter der in geschlossenem Zustand rückwärtigen Kante des hinteren Dachteils P2 liegt. Damit kann der den Fahrzeuginnenraum durchgreifende Ablageweg des Dachteilpakets P3 weit nach hinten im Fahrzeug 1 verlagert werden. Eventuelle Insassen auf einer hinteren Sitzbank werden davon nicht gestört.

Dabei können, was optisch sehr vorteilhaft ist, im geschlossenen Zustand der Heckklappe H1 die die Heckscheibe H4 seitlich einfassenden Rahmenteile H3 fluchtend zu den in Fahrtrichtung nach vorne anschließenden Dachholmen 3 liegen. Insbesondere ist dann in der der Heckscheibe H4 bzw. den beweglichen Dachteilen P1, P2 zugewandten Innenkante D2 der genannten Teile H3, 3 keine Abstufung erforderlich, sondern diese Kante D2 läuft über den gesamten Innenraum gradlinig.

Bei Öffnung der Heckklappe H1 wird dennoch ein Durchtrittsraum D1 freigegeben, der breiter als die lichte Weite D3 zwischen den Innenkanten D2 ist. Damit können die Dachteile P1 und P2 sehr breit gestaltet werden. Etwa kann auch noch eine seitlich das Dachteil P2 überragende Führungsschiene P14, in der das vordere Dachteil in seiner Offenstellung geführt ist, mit dem Dachpaket P3 durch den verbreiterten Durchtrittsraum D1 in den Innenraum der Karosserie 6 eintreten.

Zur Öffnung der beiden Teile P1 und P2 sowie der Heckscheibe H4 wird zunächst die Heckklappe H1 geöffnet, um den Durchtrittsraum D1 freizugeben. Anschließend können die Dachteile P1, P2 in der oben geschilderten Weise geöffnet werden.

Aus der geöffneten Stellung der Heckklappe H1 heraus kann vorher oder danach auch die Heckscheibe H4 aus den sie umgebenden Teilen H2, H3 in einer der beschriebenen Arten geöffnet und in platzsparender Parallellage zu den Dachteilen P1 und P2 im Innenraum abgelegt werden. Es ist ebenso möglich, daß entweder nur die Heckscheibe H4, nur das vordere Plattenteil P1, die Heckscheibe H4 und das Plattenteil P1 oder nur die vorderen Dachteile P1 und P2 geöffnet werden, je nach Wunsch.

Die Erfindung ist sowohl bei Fahrzeugen mit manuell zu bewegenden Dachteilen P1, P2, H4 als auch bei voll- oder teilautomatischer Beweglichkeit der Teile anwendbar.

## Patentansprüche

1. Kraftfahrzeug (1) mit einer in zumindest einer Stellung eine Heckscheibe (H4) umfassenden beweglichen Heckklappe (H1), wobei die Heckscheibe (H4) aus ihrer geschlossenen Stellung gegenüber sie umgebenden Bereichen (H2;H3) der Heckklappe (H1) separat in eine Freigabestellung verlagerbar ist und in dieser Freigabestellung in einem zu der Heckklappe (H1) beabstandeten Bereich in der Fahrzeugkarosserie (6) ablegbar ist,
**dadurch gekennzeichnet,**
**daß** die Heckscheibe (H4) in ihrer Freigabestellung zumindest im wesentlichen unterhalb einer seitlichen Fensterbrüstungslinie (7) der Fahrzeugkarosserie (6) ablegbar ist.

2. Kraftfahrzeug (1) nach Anspruch 1,
**dadurch gekennzeichnet,**
**daß** sich in geschlossener Stellung der Heckscheibe (H4) an ihre obere und in Fahrtrichtung vordere Kante (H5) anschließend zumindest ein weiteres bewegliches Plattenteil (P1;P2) erstreckt, das ebenfalls in der Fahrzeugkarosserie (6) ablegbar ist.

3. Kraftfahrzeug (1) nach einem der Ansprüche 1 oder 2
**dadurch gekennzeichnet,**
**daß** die Heckscheibe (H4) in jeder Stellung und Bewegungsphase am Fahrzeug (1) gehaltene ist.

4. Kraftfahrzeug (1) nach einem der Ansprüche 1 bis 3,
**dadurch gekennzeichnet,**
**daß** die Heckscheibe (H4) bei in Offenstellung befindlicher Heckklappe (H1) ablegbar ist.

5. Kraftfahrzeug (1) nach einem der Ansprüche 1 bis 4,
**dadurch gekennzeichnet,**
**daß** die Heckscheibe (H4) in ihrer Freigabestellung zumindest annähernd vertikal gehalten ist.

6. Kraftfahrzeug (1) nach einem der Ansprüche 1 bis 5,
**dadurch gekennzeichnet,**
**daß** die Heckscheibe (H4) über seitlich in der Fahrzeugkarosserie (6) angeordnete Gestängeteile (H9;H10) halterbar und beweglich ist.

7. Kraftfahrzeug (1) nach einem der Ansprüche 1 bis 6,
**dadurch gekennzeichnet,**
**daß** die Heckscheibe (H4) zur Einstellung ihrer Freigabestellung zumindest bereichsweise über seitliche Führungsschienen (H14;H15) in die Fahrzeugkarosserie (6) einfahrbar ist.

8. Kraftfahrzeug (1) nach einem der Ansprüche 1 bis 7,
**dadurch gekennzeichnet,**
**daß** die Heckklappe (H1) außerhalb der Heckscheibe (H4) im wesentlichen U-förmig ausgebildet ist und die Heckscheibe (H4) in ihrer geschlossenen Stellung zumindest bereichsweise seitlich (H13) und an ihrer Unterkante (H12) umgibt (H2;H3).

9. Kraftfahrzeug (1) nach einem der Ansprüche 2 bis 8,
**dadurch gekennzeichnet,**
**daß** die Heckscheibe (H4) und das oder die weitere(n) Plattenteil(e) (P1;P2) in Freigabestellung der Heckscheibe und Offentstellung des Daches parallel zueinander liegen.

10. Bewegliche Heckklappe (H1) für ein Kraftfahrzeug (1) nach einem der Ansprüche 1 bis 9.

## Claims

1. A motor vehicle (1) with a movable boot lid (H1) which, in at least one position, encompasses a rear window (H4), wherein the rear window (H4) can be separately shifted out of its closed position in relation to areas (H2; H3) of the boot lid (H1) which surround it into a release position, and in this release position can be stored in an area in the vehicle body (6) which is spaced apart from the boot lid (H1),
**characterised in that**
the rear window (H4), in its release position, can be stored at least substantially below a lateral window parapet line (7) of the vehicle body (6).

2. The motor vehicle (1) according to Claim 1,
**characterised in that**
in the closed position of the rear window (H4), at its upper edge (H5) which is at the front in the direction of travel, there adjacently extends at least one further movable plate part (P1 ;P2) which can also be stored in the vehicle body (6).

3. The motor vehicle (1) according to one of claims 1 or 2,
**characterised in that**
the rear window (H4) is held at the vehicle (1) in each position and movement phase.

4. The motor vehicle (1) according to one of claims 1 to 3,
**characterised in that**
the rear window (H4) can be stored when the boot lid (H1) is in the open position.

5. The motor vehicle (1) according to one of claims 1 to 4,
**characterised in that**
the rear window (H4) is held at least almost approximately in its release position.

6. The motor vehicle (1) according to one of claims 1 to 5,
**characterised in that**
the rear window (H4) can be fastened and is movable by means of bar parts (H9;H10) arranged laterally in the vehicle body (6).

7. The motor vehicle (1) according to one of claims 1 to 6,
**characterised in that**
the rear window (H4) can be inserted into the vehicle body (6), in order to adjust its release position at least in areas, via lateral guide rails (H14;H15).

8. The motor vehicle (1) according to one of claims 1 to 7,
**characterised in that**
the boot lid (H1) is formed in a substantially U-shaped manner outside the rear window (H4) and, in its closed position, surrounds (H2; H3) the rear window (H4) at least in areas laterally (H13) and at its lower edge (H12).

9. The motor vehicle (1) according to one of claims 2 to 8,
**characterised in that**
the rear window (H4) and the further plate part(s) (P1 ;P2) are situated parallel to one another when the rear window is in the release position and the roof is in the open position.

10. A moveable boot lid (H1) for a motor vehicle (1) according to one of claims 1 to 9.

## Revendications

1. Véhicule automobile (1) avec un hayon arrière (H1) mobile comprenant, au moins dans une position, une lunette arrière (H4), la lunette arrière (H4) pouvant être déplacée séparément par rapport aux zones (H2 ; H3) du hayon arrière (H1) l'entourant, de sa position fermée vers une position de libération, et, dans cette position de libération, pouvant être déposée dans la carrosserie (6) du véhicule automobile dans une zone située à distance du hayon arrière (H1), **caractérisé en ce que** la lunette arrière (H4) dans sa position de libération peut être déposée au moins substantiellement au-dessous d'une ligne latérale d'appui de fenêtre (7) de la carrosserie (6) du véhicule automobile.

2. Véhicule automobile (1) selon la revendication 1, **caractérisé en ce que,** en position fermée de la lunette arrière (H4), au moins un autre élément de plaque mobile (P1 ; P2) s'étend ensuite sur son bord (H5) supérieur et avant dans le sens de la marche, ledit élément pouvant également être déposé dans la carrosserie (6) du véhicule automobile.

3. Véhicule automobile (1) selon l'une des revendications 1 ou 2
**caractérisé en ce que,**
la lunette arrière (H4) est maintenue sur le véhicule automobile (1) dans chaque position et phase de déplacement.

4. Véhicule automobile (1) selon l'une des revendications 1 à 3,
**caractérisé en ce que**
la lunette arrière (H4) peut être déposée lorsque le hayon arrière (H1) se trouve en position d'ouverture.

5. Véhicule automobile (1) selon l'une des revendications 1 à 4,
**caractérisé en ce que,**
dans sa position de libération, la lunette arrière (H4) est maintenue au moins approximativement à la verticale.

6. Véhicule automobile (1) selon l'une des revendications 1 à 5,
**caractérisé en ce que**
la lunette arrière (H4) peut être maintenue et déplacée par l'intermédiaire des parties de tringlerie (H9 ; H10) disposées latéralement dans la carrosserie (6) du véhicule automobile.

7. Véhicule automobile (1) selon l'une des revendications 1 à 6,
**caractérisé en ce que,**
pour l'ajustement de sa position de libération, la lunette arrière (H4) peut être rentrée, au moins par endroit, dans la carrosserie (6) du véhicule automobile par l'intermédiaire des glissières de guidage latérales (H14 ; H15).

8. Véhicule automobile (1) selon l'une des revendications 1 à 7,
**caractérisé en ce que**
le hayon arrière (H1) est réalisé, substantiellement en forme de U, à l'extérieur de la lunette arrière (H4) et entoure (H2 ; H3) la lunette arrière (H4), dans sa position fermée, au moins par endroit, latéralement (H13) et sur son bord inférieur (H12).

9. Véhicule automobile (1) selon l'une des revendications 2 à 8,
**caractérisé en ce que**
la lunette arrière (H4) et le ou les autre(s) élément(s) de plaque (P1 ; P2), en position de libération de la lunette arrière et en position ouverte du toit, sont parallèles les uns par rapport aux autres.

10. Hayon arrière mobile (H1) pour un véhicule automobile (1) selon l'une des revendications 1 à 9.
